# EUROPÄISCHE PATENTSCHRIFT

(11) **EP 3 275 337 B1**
(45) Veröffentlichungstag und Bekanntmachung des Hinweises auf die Patenterteilung: **19.02.2020**
(21) Anmeldenummer: 16181878.6
(22) Anmeldetag: 29.07.2016
(51) Int. Cl.: B29C 67/24, A45D 40/16, B23K 26/00, B23K 26/03, B23K 26/08, B23K 26/082

(54) **VERFAHREN UND VORRICHTUNG ZUM BILDEN EINER EGALISIERTEN OBERFLÄCHE VON PASTÖSEN MASSEN**
METHOD AND APPARATUS FOR FORMING A LEVELED SURFACE OF PASTY MASSES
PROCÉDÉ ET APPAREIL POUR FAIRE UNE SURFACE LISSÉE D'UNE SUBSTANCE MOELLEUSE

(43) Veröffentlichungstag der Anmeldung: 31.01.2018
(73) Patentinhaber: Weckerle GmbH, 82362 Weilheim (DE)
(72) Erfinder: Ellert, Peter, 82431 Kochel am See (DE); Fink, Andreas, 82362 Weilheim (DE)
(74) Vertreter: Hohgardt, Martin

(56) Entgegenhaltungen:
- WO-A1-2008/118365
- JP-A- 2004 010 494
- US-A- 4 172 113
- Photonhive: "Tutorial 1: how to choose a galvo scanner", , 10 February 2016 (2016-02-10), Retrieved from the Internet: URL:http://photonhive.com/tutorial-1-how-t o-choose-a-galvo-scanner/ [retrieved on 2019-06-20]

## Beschreibung

Die vorliegende Erfindung betrifft im Allgemeinen das Egalisieren einer Oberfläche von zumindest einer pastösen Masse. Die vorliegende Erfindung betrifft insbesondere das Egalisieren einer Oberfläche von zumindest einer pastösen Masse in einer Form zur Herstellung einer Lippenstiftmine.

Bei der Herstellung von Lippenstiftminen werden unterschiedliche Wachse und Additive gemischt. Hierfür werden die Wachse und Additive vor dem Mischen durch Erwärmung in einen fließfähigen Zustand überführt. Die gemischten Wachse und Additive können auch als pastöse Masse bezeichnet werden. Die pastöse Masse wird nach dem Mischen in eine Form gefüllt und in dieser abgekühlt, um in der Form zu erstarren und eine Lippenstiftmine herzustellen.

Beim Abkühlen der pastösen Masse in der Form ergibt sich aber das Problem, dass sich Unebenheiten auf der Oberfläche bilden, beispielsweise an einer freien Oberfläche. Eine freie Oberfläche ist dabei jedwede Oberfläche der pastösen Masse, die nicht von der Form beziehungsweise einer Wandung der Form kontaktiert wird. Die Unebenheiten können auch als Krater bezeichnet werden, weil diese Unebenheiten zumeist am Rand der Oberfläche höher ausgeprägt sind als in der Mitte der Oberfläche.

Es sind Verfahren und Vorrichtungen bekannt, mit deren Hilfe versucht wird, die Oberfläche der pastösen Masse aufzuschmelzen, um durch das Aufschmelzen zu verhindern, dass sich ein Krater bildet, während die restliche pastöse Masse in der Form abkühlt und erstarrt.

In der US 4,172,113 wird beispielsweise eine Vorrichtung beschrieben, in der nach oben offene Formen mit der darin enthaltenen pastösen Masse unter Luftdüsen hindurchbewegt werden, wobei aus den Luftdüsen erhitzte Luft ausströmt. Die Düsen sind dabei vertikal nach unten gerichtet und in einer Reihe angeordnet, sodass die Formen während ihrer Bewegung nacheinander mehrere Düsen passieren. Hierbei sind die Düsen so dimensioniert, dass die erhitzte Luft gezielt auf die Oberfläche der pastösen Masse in den Formen gelenkt wird, die sich gerade unter der Düse befinden. Damit soll erreicht werden, dass die pastöse Masse nach dem Gießen an ihrer Oberfläche in einem fließfähigen Zustand verbleiben kann, während die restliche pastöse Masse in der Form erstarrt, so dass die Bildung eines Kraters verhindert wird. Die in US 4,172,113 gezeigte Vorrichtung ist jedoch wenig energieeffizient. Zum einen wird viel Energie benötigt, um die Luft zu erhitzen, und zum anderen geht durch den Luftstrom viel Energie verloren. Des Weiteren weist die Vorrichtung den Nachteil auf, dass der erhitzte Luftstrom die flüssige Masse aus der Form bläst. In Folge kommt es zu einer deutlich sichtbaren Verschmutzung aller am Prozess beteiligten Anlagenbauteile.

Es stellt sich daher die Aufgabe, ein Verfahren und eine Vorrichtung bereitzustellen, die die oben genannten Nachteile nicht aufweisen. Insbesondere soll mit dem Verfahren und der Vorrichtung die Oberfläche der pastösen Masse in der Form möglichst energieeffizient erwärmt werden ohne dass dabei Anlagenteile verschmutzt werden.

Diese Aufgabe wird mit dem Verfahren und der Vorrichtung der unabhängigen Ansprüche gelöst. Vorteilhafte Ausführungsformen sind in den Unteransprüchen beschrieben.

Das erfindungsgemäße Verfahren zum Bilden einer egalisierten Oberfläche von zumindest einer pastösen Masse in einer Form, wobei die Form insbesondere angepasst ist zum Formen von Lippenstiftminen, weist das Befüllen der Form mit der pastösen Masse auf. Darüber hinaus weist das Verfahren das zumindest teilweise Abkühlen der pastösen Masse in der Form und das zumindest teilweise Aufschmelzen der Oberfläche der abgekühlten pastösen Masse in der Form zum Egalisieren der Oberfläche durch Wärmeeintrag auf, wobei der Wärmeeintrag durch fokussierte optische Photoemission stattfindet. Das zumindest teilweise Aufschmelzen der Oberfläche kann dabei bedeuten, dass nur ein gewisser Teil der Oberfläche aufgeschmolzen wird, es ist aber auch denkbar, dass die gesamte Oberfläche aufgeschmolzen wird. Das Befüllen der Form mit der pastösen Masse geschieht beispielsweise mittels einer Düse, die mindestens eine Öffnung aufweist, aus der die pastöse Masse in einem noch fließfähigen Zustand in die Form gefüllt werden kann. Die Düse und die Form können sich dabei beispielsweise beim Befüllen relativ zueinander bewegen. Beispielsweise kann die Düse zunächst zumindest teilweise in der Form angeordnet sein und beim Befüllen kann die Düse durch eine Bewegung der Düse selbst oder durch eine Bewegung der Form aus der Form bewegt werden. Alternativ können sich auch die Form und die Düse gleichzeitig bewegen. Eine derartige Befüllung kann auch als Gießbefüllung bezeichnet werden. Bei der Befüllung und/oder vor der Befüllung kann die Form bereits aufgeheizt werden, um zu verhindern, dass die pastöse Masse bereits beim Auftreffen auf die Form erstarrt. Somit können glattere Oberflächen erzeugt werden. Nach dem Befüllen der Form mit der pastösen Masse wird die Form beziehungsweise die pastöse Masse gekühlt, um das Erstarren der pastösen Masse in der Form zu beschleunigen. Dieses Abkühlen der pastösen Masse kann ein gezieltes, also geregeltes, Abkühlen sein. Beispielsweise kann die Form direkt oder indirekt von einem Wärmeträgermedium umströmt oder umflossen werden, um die Form und damit die sich darin befindliche pastöse Masse abzukühlen. Das Wärmeträgermedium kann dabei Luft oder Wasser oder ein anderer Träger sein. Das Abkühlen kann dabei derart geregelt werden, dass dies auf die Zusammensetzung der pastösen Masse abgestimmt ist. Der Abkühl-Erstarr-Verlauf kann über die Temperatur geregelt werden, die das Wärmeträgermedium hat. Beispielsweise kann die Temperatur des Wärmeträgermediums über eine bestimmte Zeit sukzessive verringert werden.

Bei Abkühlung der Form kühlt auch die pastöse Masse in der Form ab, die zu erstarren beginnt. Dabei erfährt sie eine Schrumpfung. Die Ursache dafür ist die thermische Kontraktion der pastösen Masse bei deren Abkühlung und Erstarrung, die im Allgemeinen bei jedem Stoff durch die Wärmeausdehnung hervorgerufen wird. Bedingt durch die Schrumpfung der pastösen Masse, bildet sich ein Erstarrungskrater an der Oberfläche der pastösen Masse aus. Die Oberfläche kann dabei eine Oberfläche sein, die nicht mit der Form kontaktiert.

Das Ausbilden des Erstarrungskraters bewirkt eine Unebenheit an der Oberfläche der pastösen Masse, die sich nachteilig auf die Prozessgüte bei der Lippenstiftherstellung auswirkt. Sie kann beispielsweise im weiteren Prozessverlauf der Lippenstiftherstellung die Entnahme der ausgehärteten pastösen Masse aus der Form, beispielsweise einer flexiblen Form, erschweren. Diese Unebenheit kann erfindungsgemäß durch Aufschmelzen und Egalisieren der Oberfläche der pastösen Masse behoben werden. Dabei wird durch einen Wärmeeintrag die Oberfläche der pastösen Masse zumindest teilweise oder vollständig aufgeschmolzen, während die restliche pastöse Masse in der Form erstarrt. Das Aufschmelzen bedeutet dabei, dass die pastöse Masse erneut in einen fließfähigen Zustand überführt wird, die pastöse Masse sich also wieder in einem Zustand befindet, in dem diese sich selbstständig über die Oberfläche oder zumindest einen Teil der Oberfläche verteilen kann. Dadurch nimmt die pastöse Masse selbständig ein einheitliches Niveau an. Es kann also gesagt werden, dass die pastöse Masse an der Oberfläche durch das Aufschmelzen überall gleich flach wird. Erfindungsgemäß findet der Wärmeeintrag zum Aufschmelzen hierbei durch fokussierte optische Photoemission statt, die beispielsweise von einem Laser bereitgestellt wird. Im Unterschied zu den aus dem Stand der Technik bekannten Verfahren, werden durch den Einsatz einer fokussierten optischen Photoemission ein gezielteres und energetisch effizienteres Egalisieren der Oberfläche ermöglicht.

Das erfindungsgemäße Verfahren und die beschriebene Vorrichtung stellen erstmalig ein Verfahren und eine Vorrichtung bereit, mit denen die Oberfläche einer abgekühlten pastösen Masse in einer Form gezielt und energetisch effizient durch Wärmeeintrag aufgeschmolzen und egalisiert werden kann, um der Ausbildung eines Kraters auf der Oberfläche der pastösen Masse entgegenzuwirken.

In einer bevorzugten Ausführungsform des erfindungsgemäßen Verfahrens wird der Wärmeeintrag gesteuert. Mit Hilfe der Steuerung kann der Wärmeeintrag beispielsweise individuell für jede einzelne Oberfläche angepasst werden. Es kann also jede Oberfläche individuell bearbeitet werden, so dass optimale Ergebnisse erzielt werden können. Die Steuerung des Wärmeeintrags kann dabei eine Änderung der Richtung der fokussierten optischen Photoemission sein. Die Richtungsänderung der fokussierten optischen Photoemission kann dazu verwendet werden, verschiedene Bereiche der Oberfläche der pastösen Masse zu bestrahlen und damit Bereiche der Oberfläche gezielt aufzuschmelzen. Weicht die Oberfläche beispielsweise in einem Bereich verstärkt von einer ebenen Fläche ab, gibt es also in einem Bereich verstärkt Unebenheiten, so kann die fokussierte optische Photoemission gezielt dorthin gelenkt werden, um diese Bereiche und die sich dort angesammelte pastöse Masse aufzuschmelzen. Bei dem Erstarrungskrater sind die Unebenheiten beispielsweise am Rand der Form aufzufinden. Sind die Unebenheiten hingegen auf der Oberfläche unregelmäßig verteilt, so können durch die fokussierte optische Photoemission auch diese unregelmäßigen Unebenheiten gezielt bestrahlt werden. Die Änderung der Richtung der fokussierten optischen Photoemission kann keinem Muster oder einem bestimmten Muster folgen. Weicht die Oberfläche beispielsweise wiederholt in bestimmten Bereichen von einer ebenen Fläche ab, so kann die Richtung der fokussierten optischen Photoemission einem Muster folgen und für mehrere Oberflächen verwendet und wiederholt werden. In diesem Fall kann auch davon gesprochen werden, dass die Änderung der Richtung der fokussierten optischen Photoemission einem adaptiven Muster folgt, wobei das Muster erlernt wird und statistisch über das Aufschmelzen mehrerer Oberflächen angepasst wird. Das Muster kann aber auch ein vorher bestimmtes Muster sein, wie beispielsweise ein helix-förmiges Muster oder konzentrische Ringe etc. Beispielsweise kann dabei ein Muster gewählt werden, welches einen gleichmäßigen Wärmeeintrag erlaubt. Dabei wird jeder Bereich der Oberfläche beispielsweise gleich lang bestrahlt, d.h. das Muster sorgt dafür, dass die fokussierte optische Photoemission immer gleich lang auf einen Bereich der Oberfläche auftrifft. Dem Fachmann sind dabei verschiedene Muster bekannt, die einen gleichmäßigen Wärmeeintrag erlauben. Es ist aber auch denkbar, dass die Richtung der fokussierten optischen Photoemission immer nur derart geändert wird, dass der Rand der Oberfläche aufgeschmolzen wird. Das Muster kann also entsprechend der Ausgestaltung, d.h. der geometrischen Ausgestaltung, der Oberfläche gewählt werden, also in Abhängigkeit von der Öffnung in der Form, durch welche die Form befüllt wird. Es ist aber auch denkbar, dass die Richtung der fokussierten optischen Photoemission individuell für jede aufzuschmelzende Oberfläche geändert wird. In diesem Fall kann gesagt werden, dass die Richtungsänderung der fokussierten optischen Photoemission frei gewählt wird und keinem bestimmten Muster folgt.

Die Steuerung des Wärmeeintrags kann auch, oder alternativ, eine Regelung der Energie der fokussierten optischen Photoemission sein. Die fokussierte optische Photoemission weist eine hohe Energiedichte auf, deren Intensität rasch einen Bereich erreichen kann, in dem die Oberfläche der bestrahlten pastösen Masse nicht mehr geschmolzen wird, sondern durch die hohe Energie der auftreffenden Strahlung beschädigt wird. Eine Schädigung der Oberfläche kann sich dadurch äußern, dass die Oberfläche der bestrahlten pastösen Masse an der Stelle, an der die Strahlung auftrifft, verbrannt wird. Es kann auch passieren, dass die pastöse Masse an der Stelle, an der die Strahlung auftrifft, herausgesprengt wird. Die Energie kann daher beispielsweise derart geregelt werden, dass die pastöse Masse nur möglichst schnell schmilzt aber nicht beschädigt wird. Dabei kann beispielsweise die Leistung der fokussierten optischen Photoemission angepasst werden, wodurch beispielsweise ein Einsatz von Lasern in verschiedenen Leistungsstufen als Quelle für die fokussierte optische Photoemission ermöglicht wird. Die Regelung der Energie der fokussierten optischen Photoemission kann auch dazu verwendet werden, die Energie auf verschiedene pastöse Massen, die beispielsweise aus unterschiedlichen Wachsen und Additiven bestehen, einzustellen. Darüber hinaus kann die Regelung der Energie der fokussierten optischen Photoemission dazu verwendet werden, die Eindringtiefe der auftreffenden fokussierten optischen Photoemission in der bestrahlten pastösen Masse zu regeln. Es wird dadurch beispielsweise geregelt, wieviel Volumen der pastösen Masse aufgeschmolzen wird. Es ist auch denkbar, dass die Prozesszeit über die Regelung der Energie der fokussierten optischen Photoemission gesteuert werden kann.

Eine weitere bevorzugte Ausführungsform des erfindungsgemäßen Verfahrens weist auf, das Bestimmen eines ersten Grades der Ebenheit der Oberfläche der pastösen Masse vor dem Aufschmelzen und das Beginnen des Aufschmelzens der Oberfläche, wenn der erste Grad der Ebenheit einen ersten Grenzwert erreicht. Für die Bestimmung des Grades der Ebenheit der Oberfläche wird diese mit Hilfe eines Sensors abgetastet. Der Sensor kann hierbei beispielsweise eigenständig Strahlung aussenden und die Reflektion von der Oberfläche aufnehmen, anhand derer die Unebenheit der Oberfläche bestimmt werden kann. Der Sensor kann auch die Reflektion der fokussierten optischen Photoemission selbst verwenden und diese aufnehmen, um die Unebenheit der Oberfläche zu bestimmen. Es ist auch denkbar, dass der Sensor akustische Wellen aussendet und die Reflektion von der Oberfläche aufnimmt, anhand derer die Unebenheit der Oberfläche bestimmt werden kann. Der Sensor kann auch ein Bild der Oberfläche machen und ein Computer kann anhand des Bildes den ersten Grad der Ebenheit der Oberfläche bestimmen. Mit Hilfe der Bestimmung des Grades der Ebenheit der Oberfläche ist es möglich, das Aufschmelzen der Oberfläche individuell von ihrer Unebenheit abhängig zu machen. Im Falle, dass die Oberfläche einen Grad der Ebenheit aufweist, der außerhalb eines definierten Grenzwertes liegt, kann das Aufschmelzen der Oberfläche beispielsweise ausgesetzt werden, wodurch sich die Prozessdauer bei der Lippenstiftherstellung verkürzen lässt. Dabei kann der erste Grenzwert im Bereich von 5 mm bis 25 mm liegen. D.h. Messpunkte auf der Oberfläche sollten eine Höhendifferenz aufweisen die innerhalb dieses Bereiches liegt. Weist die Höhendifferenz von zumindest zwei Messpunkten einen Wert auf, der größer ist als der definierte Bereich, so ist die Oberfläche uneben und das Aufschmelzen wird begonnen.

Eine weitere bevorzugte Ausführungsform des erfindungsgemäßen Verfahrens weist auf, das Bestimmen eines zweiten Grades der Ebenheit der Oberfläche der pastösen Masse beim Aufschmelzen und das Beenden des Aufschmelzens der Oberfläche, wenn der zweite Grad der Ebenheit einen zweiten Grenzwert erreicht. Die Bestimmung des zweiten Grades der Ebenheit der Oberfläche wird auch mit Hilfe eines Sensors bewerkstelligt. Sobald der Sensor eine egalisierte Oberfläche erkennt, also die Unebenheiten ein Maß erreicht haben, das tolerabel ist, wird das Aufschmelzen gestoppt. Somit kann die Dauer des Aufschmelzens gezielt gesteuert werden, was sich positiv auf die Prozessdauer bei der Lippenstiftherstellung auswirkt. Für die Bestimmung des Grades der Ebenheit der betrachteten Oberfläche kann die Oberfläche zunächst mit einer definierten Auflösung von dem Sensor abgetastet werden. Die Auflösung bestimmt die Anzahl der Messpunkte, die pro Flächeneinheit aufgenommen werden. Die vom Sensor abgetastete Oberfläche kann dabei den gesamten Oberflächenbereich der pastösen Masse in der flexiblen Form umfassen oder der Sensor tastet nur einen Teilbereich der Oberfläche der pastösen Masse in der Form ab. Dabei liefert der Sensor für jeden der Messpunkte einen Wert, der beispielsweise den Abstand des Messpunktes vom Sensor wiedergibt. Der Ort jedes Messpunktes und der zu jedem der Messpunkte dazugehörige Wert, werden gespeichert. Es ergibt sich somit ein Höhenprofil, welches die Gestaltabweichung der abgetasteten Ist-Oberfläche von einer ideal glatten Oberfläche wiedergibt. Anhand der gemessenen Werte an den Messpunkten, die beispielsweise den Abstand der Messpunkte vom Sensor wiedergeben, kann ein gemittelter Wert des Abstands der abgetasteten Oberfläche vom Sensor ermittelt werden, der beispielsweise die Soll-Höhe der Oberfläche der pastösen Masse in der Form abbildet. Dieser gemittelte Wert kann beispielsweise der arithmetische Mittelwert der Messwerte sein. Dem Fachmann sind noch weitere mathematische Verfahren zur Bestimmung von Mittelwerten bekannt, die in den hier gezeigten Ausführungsformen auch zum Einsatz kommen können. Der Grad der Ebenheit der abgetasteten Oberfläche kann beispielsweise bestimmt werden, indem die Anzahl der gemessenen Werte, die von dem ermittelten Mittelwert abweichen, bestimmt wird. Die Differenz zwischen der Anzahl der abweichenden Messwerte und der Anzahl aller Messwerte kann hierbei einen Grad der Ebenheit darstellen. Es ist auch denkbar, dass neben der reinen Anzahl der abweichenden Messwerte auch der Betrag jedes Messwerts in die Kalkulation des Grades der Ebenheit mit einfließt. Man kann sagen, dass in diesem Fall jeder Messwert anhand seines Betrages gewichtet in die Kalkulation des Grades der Ebenheit mit einfließt.

Dem Fachmann sind noch weitere Verfahren für die Bestimmung der Ebenheit von Oberflächen bekannt, die in den hier gezeigten Ausführungsformen zum Einsatz kommen können.

Auch beschrieben wird eine Vorrichtung zum Bilden einer egalisierten Oberfläche von zumindest einer pastösen Masse in einer Form, wobei die Form insbesondere angepasst ist zum Formen von Lippenstiftminen, und die Form mit der pastösen Masse befüllt wurde und die pastöse Masse zumindest teilweise in der Form abgekühlt wurde. Die Vorrichtung weist ein Mittel auf zum zumindest teilweisen Aufschmelzen der Oberfläche der zumindest einen abgekühlten pastösen Masse in der Form zum Egalisieren der Oberfläche durch Wärmeeintrag, wobei der Wärmeeintrag durch fokussierte optische Photoemission stattfindet. Dabei kann das Mittel zum Aufschmelzen ein Laser sein, der die fokussierte optische Photoemission emittiert. Beispielsweise kann ein Faserlaser verwendet werden. Dieser kann Strahlung mit einer Wellenlänge von 980 nm ± 10 nm und einer Energiedichte von 8,5 x 10⁵ W/cm² abgeben. Dem Fachmann ist bewusst, dass aber auch andere Laser oder andere Mittel zur fokussierten Abgabe von Photoemission verwendet werden können, um in einer pastösen Masse einen fokussierten Wärmeeintrag hervorzurufen.

In einer bevorzugten Ausführungsform weist die Vorrichtung ein Mittel zur Steuerung des Wärmeeintrages auf. Das Mittel zur Steuerung steuert insbesondere das Mittel zum Aufschmelzen. Beispielsweise kann das Mittel zur Steuerung die Richtung der fokussierten optischen Photoemission ändern. Hierzu kann das Mittel zur Steuerung beispielsweise eine bewegliche Optik oder einen beweglichen Spiegel aufweisen, mit denen die Richtung der fokussierten optischen Photoemission geändert werden kann. Dabei kann der verwendete Spiegel beispielsweise eine auf die Wellenlänge des Laserstrahls abgestimmte Beschichtung aufweisen. Es kann beispielsweise auch ein Prisma verwendet werden, welches auf Grund der Auswahl an Substraten, Beschichtungen oder einer Kombination von Substraten und Beschichtungen gefertigt ist, um eine hohe Reflektion in einem bestimmten Wellenlängenbereich zu erhalten. Dabei sind derartige Prismen zur internen Reflektion einer fokussierten optischen Photoemission an mehreren Flächen vorgesehen, um die fokussierten optischen Photoemission umzulenken. Alternativ oder zusätzlich kann das Mittel zum Steuern auch das gesamte Mittel zum Aufschmelzen bewegen und damit die Richtung der fokussierten optischen Photoemission ändern. Das Mittel zum Steuern kann dabei ein Galvo-Scanner sein, der beispielsweise die Optik zum Lenken der fokussierten optischen Photoemission bewegt. Alternativ kann das Mittel zum Steuern das Mittel zum Aufschmelzen selbst bewegen. Ein Galvo-Scanner ist dabei ein hochdynamischer Drehantrieb, der in Abhängigkeit einer Zeitdauer einer angelegten Spannung einen bestimmten Drehwinkel annimmt.

Das Mittel zum Steuern kann auch die Energie der fokussierten optischen Photoemission, die auf der Oberfläche der pastösen Masse in der Form auftrifft, regeln. Beispielsweise kann das Mittel zum Steuern die Durchlässigkeit, also die Opazität eines Materials regeln, durch welches die fokussierte optische Photoemission gesendet wird, um die Energie der fokussierten optischen Photoemission, die auf der Oberfläche der pastösen Masse in der Form auftrifft, zu regeln. Alternativ oder zusätzlich können auch unterschiedliche Filter verwendet werden, um die Energie der fokussierten optischen Photoemission zu steuern. Es ist auch denkbar, dass das Mittel zum Aufschmelzen selbst die Energie, mit der die fokussierte optische Photoemission das Mittel verlässt, steuern kann.

In einer weiteren bevorzugten Ausführungsform weist die Vorrichtung ein Mittel zum Bestimmen eines ersten Grades der Ebenheit der Oberfläche der pastösen Masse vor dem Aufschmelzen auf, wobei das Mittel zum Aufschmelzen angepasst ist, das Aufschmelzen der Oberfläche zu beginnen, wenn der erste Grad der Ebenheit einen ersten Grenzwert erreicht. Dabei kann das Mittel zum Bestimmen eines ersten Gerades der Ebenheit ein Sensor sein, der die Oberfläche abtastet und deren Unebenheit bestimmt. Als Sensor kann beispielsweise ein oberflächenabtastender Laser-Wegmesssensor verwendet werden, der die Reflektion eines auf der Messoberfläche fokussierten Laserlichtpunktes auswertet. Der Sensor misst präzise die Distanz zur Oberfläche, wobei die Messgenauigkeit weder von der Zusammensetzung der pastösen Masse noch von der Farbe oder dem Betrachtungswinkel beeinträchtigt wird.

In einer weiteren bevorzugten Ausführungsform weist die Vorrichtung ein Mittel zum Bestimmen eines zweiten Gerades der Ebenheit der Oberfläche beim Aufschmelzen auf, wobei das Mittel zum Aufschmelzen angepasst ist, das Aufschmelzen der Oberfläche zu beenden, wenn der zweite Grad der Ebenheit einen zweiten Grenzwert erreicht.

Die Erfindung wird nachfolgend anhand von Ausführungsbeispielen mit den beigefügten Zeichnungen näher erläutert. Aus dem beschriebenen Ausführungsbeispielen ergeben sich weitere Einzelheiten, Merkmale und Vorteile des Gegenstands der Erfindung. Es zeigen:
Fig. 1 einen Vertikalschnitt durch eine exemplarische Form befüllt mit einer pastösen Masse mit Erstarrkrater;
Fig. 2 die in Fig. 1 gezeigte exemplarische Form mit einer Ausführungsform der Vorrichtung vor Beginn des Aufschmelzens der Oberfläche der pastösen Masse in der Form;
Fig. 3 die in Fig. 1 gezeigte exemplarische Form mit der in Fig. 2 gezeigten Ausführungsform der Vorrichtung nach dem Aufschmelzen und Egalisieren der Oberfläche der pastösen Masse in der Form;
Fig. 4 die in Fig. 1 gezeigte exemplarische Form mit einer Ausführungsform der Vorrichtung in einer beweglichen Ausführung vor Beginn des Aufschmelzens der Oberfläche der pastösen Masse in der Form;
Fig. 5 die in Fig. 1 gezeigte exemplarische Form mit der in Fig. 4 gezeigten Ausführungsform der Vorrichtung nach dem Aufschmelzen und Egalisieren der Oberfläche der pastösen Masse in der Form.

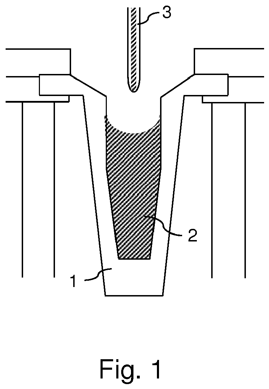

Figur 1 zeigt anhand eines Vertikalschnitts durch eine Form 1 schematisch das Befüllen der Form 1 mit einer pastösen Masse 2 mittels einer Düse 3 und das anschließende Abkühlen der Form 1 mit der darin enthaltenen pastösen Masse 2, welche in dem hier gezeigten Ausführungsbeispiel als schraffierte Fläche gezeigt wird. Die Form 1 kann beispielsweise eine flexible Form 1 sein. Über die Düse 3 kann die Form 1 befüllt werden. Dabei kann die Düse 3 zunächst zumindest teilweise in der Form 1 angeordnet sein und beim Befüllen der Form 1 aus dieser herausbewegt werden. Das Herausbewegen kann dabei durch eine Relativbewegung der Form 1 und der Düse 3 bewerkstelligt werden. Die pastöse Masse 2, die sich in der flexiblen Form 1 befindet, hat hier bereits begonnen abzukühlen und zu erstarren und es ist zu erkennen, dass sich auf der Oberfläche der pastösen Masse 2 in der nach oben offenen Form 1 ein Erstarrungskrater ausgebildet hat. In dem hier gezeigten Ausführungsbeispiel hat sich der Erstarrungskrater an der freien Oberfläche der pastösen Masse 2 gebildet, also an einer Oberfläche, die nicht kontaktiert ist durch eine Wandung der Form 1. Der Erstarrungskrater ist durch die Wölbung der schraffierten Fläche angedeutet. Ein charakteristisches Merkmal des Erstarrungskraters wird hierbei deutlich. Es ist zu erkennen, dass sich die pastöse Masse 2 im mittleren Bereich ihrer Oberfläche in der nach oben offenen Form 1 absenkt und dass dadurch die pastöse Masse 2 zu den Rändern hin ansteigende Flanken aufweist.

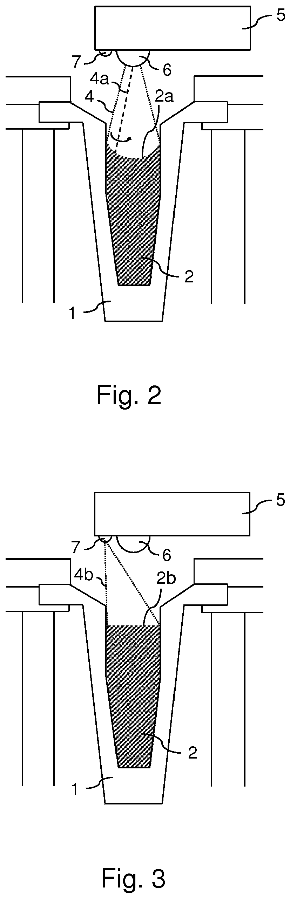

Figur 2 zeigt noch einmal den in Figur 1 gezeigten Vertikalschnitt durch die Form 1 mit der pastösen Masse 2 und dem Erstarrungskrater. Des Weiteren zeigt Figur 2 ein exemplarisches Mittel zum Aufschmelzen 5 der Oberfläche 2a der pastösen Masse 2. In dem hier gezeigten Ausführungsbeispiel ist das Mittel zum Aufschmelzen 5 eine Lasereinheit, die bevorzugt einen Faserlaser umfasst - hier nicht gezeigt. Die Lasereinheit 5 erzeugt einen Laserstrahl 4a. Dieser Laserstrahl 4a ist eine fokussierte optische Photoemission. Die Richtung des Laserstrahls 4a kann in dem hier gezeigten Ausführungsbeispiel innerhalb des Bereichs 4 geändert oder gesteuert werden. Der Laserstrahl 4a kann innerhalb des Bereichs 4, der in dem hier gezeigten Ausführungsbeispiel als Kegelstumpf gezeigt ist, bewegt werden. Hierzu weist die Lasereinheit 5 ein Mittel zum Steuern 6 auf. Dieses Mittel zum Steuern 6 kann ein Galvo-Scanner sein, der eine Optik, beispielsweise einen mit einem Filter beschichteten Spiegel oder ein Prisma - hier nicht gezeigt - zum Lenken des Laserstrahls 4a, bewegt. Der Galvo-Scanner 6 ist dabei derart angepasst, dass der Laserstrahl 4a sich innerhalb des Bereichs 4 bewegen kann. Der Bereich 4 ist dabei derart ausgelegt, dass dieser die gesamte Oberfläche 2a der pastösen Masse 2 abdecken kann. Trifft der Laserstrahl 4a auf die pastöse Masse 2 an der Oberfläche 2a, so bewirkt der Laserstrahl 4a einen Wärmeeintrag in die pastöse Masse 2. Durch diesen Wärmeeintrag wird die pastöse Masse 2 an der Oberfläche 2a aufgeschmolzen, d.h. sie wird wieder in einen fließfähigen Zustand überführt. Die fließfähige pastöse Masse 2 kann sich dann verteilen und nivellieren, d.h. die Oberfläche 2a wird egalisiert. Dies ist in Figur 3 gezeigt, wo sich der Erstarrungskrater aufgelöst hat und sich die Oberfläche 2a zu einer egalisierten Oberfläche 2b ausgebreitet hat. Hierbei tastet der Sensor 7 die nach oben freie Fläche 2a, 2b der pastösen Masse 2 in der Form 1 ab und betrachtet dabei die gesamte Oberfläche 2a, 2b der pastösen Masse 2, die sich innerhalb des Kegels 4b befindet. Es ist dem Fachmann bewusst, dass die Menge der aufgeschmolzenen pastösen Masse 2 von der Energieeinwirkung des Laserstrahls 4a und dessen Verweildauer an einer Stelle abhängig ist. Die Verweildauer lässt sich dabei durch den Galvo-Scanner 6 steuern, der den Laserstrahl 4a über die Oberfläche 2a in einem bestimmten Muster bewegen kann. Beispielsweise wird der Laserstrahl 4a derart bewegt, dass dieser das Aufschmelzen in der Mitte der Form 1 beginnt, d.h. im Zentrum der Oberfläche, also am tiefsten Punkt des Erstarrungskraters und dann konzentrisch nach außen zum Rand der Form 1 bewegt wird. Auf diese Weise wird verhindert, dass tiefe Erstarrungskrater nur verschlossen werden und es zu Lunkerbildung - Hohlraumbildung - kommt. Des Weiteren kann die Lasereinheit 5 ein Mittel aufweisen - hier nicht gezeigt -, welches die abgegebene Energie des Laserstrahls 4a steuert.

In dem hier gezeigten Ausführungsbeispiel weist die Lasereinheit 5 auch noch ein Mittel zum Bestimmen 7 der Ebenheit der Oberfläche 2a auf. Dieses Mittel kann ein Sensor sein, der optisch oder akustisch den Grad der Ebenheit der Oberfläche 2a bestimmen kann, um so den Galvo-Scanner 6 zu regeln, dass dieser den Laserstrahl 4a derart lenkt, dass der Laserstrahl 4a auf Bereiche trifft, in denen der Grad der Ebenheit am schlechtesten ist. Hierzu kann der Sensor 7 ein aktiver Sensor 7 sein, der Sensor 7 kann also selbst ein Signal aussenden, dessen Reflektion bestimmt wird, um den Grad der Ebenheit zu bestimmen. Alternativ kann der Sensor 7 ein passiver Sensor 7 sein, der zur Bestimmung des Grades der Ebenheit die Reflektion des Laserstrahls 4a nutzt.

Der Sensor 7 kann einen oder mehrere Ausgabewerte an einen Mikrocontroller - hier nicht gezeigt - der Lasereinheit 5 abgeben. Mit diesem einen oder den mehreren Ausgabewerten kann der Mikrocontroller bestimmen, ob das Aufschmelzen fortgeführt werden soll und wenn die Ausgabewerte eine Darstellung des Grades der Ebenheiten über die Oberfläche 2a erlauben, so kann der Mikrocontroller auch den Galvo-Scanner 6 anweisen, den Laserstrahl 4a an bestimmte Positionen zu bewegen. Alternativ oder zusätzlich kann eine derartige Regelung auch von einem mit der Lasereinheit 5 verbundenen Computer - hier nicht gezeigt - bewerkstelligt werden. Der Sensor 7 kann auch bestimmen, wann der Grad der Ebenheit einen Wert erreicht hat, bei dem kein weiteres Aufschmelzen mehr nötig ist. In diesem Fall kann der Sensor 7 anzeigen, dass die Lasereinheit 5 das Aufschmelzen stoppen soll. In diesem Fall wird der Laser der Lasereinheit 5 abgeschaltet oder der Laserstrahl 4a wird zumindest derart abgelenkt oder blockiert, dass dieser nicht mehr auf die Oberfläche 2a trifft. Eine egalisierte Oberfläche ist in Figur 3 gezeigt. Hier hat die Oberfläche 2b ein einheitliches Niveau angenommen, d.h. die Oberfläche 2b ist geglättet und der Laserstrahl 4a ist abgeschaltet.

In dem in Figuren 2 und 3 gezeigten Ausführungsbeispiel der erfindungsgemäßen Vorrichtung wurde der Laserstrahl 4a der Lasereinheit 5 mit Hilfe eines Galvo-Scanners 6 bewegt und kann somit den Bereich 4 abdecken.

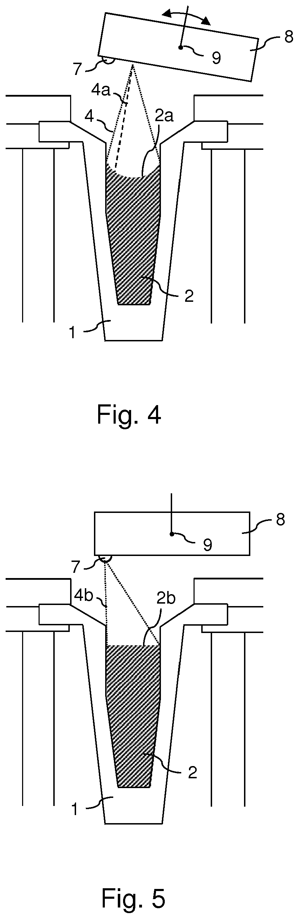

Es ist aber auch denkbar, dass nicht der Laserstrahl 4a selbst bewegt wird, sondern die komplette Lasereinheit 8. Dies ist in den Figuren 4 und 5 gezeigt.

Hier wird die Lasereinheit 8 bewegt, beispielsweise mit Hilfe eines Mittels zum Bewegen 9. Dieses Mittel zum Bewegen 9 kann ein Galvometer oder Schrittschaltmotors oder ähnliches sein und sich in oder an der Lasereinheit 8 befinden. Die Steuerung des Mittels zum Bewegen 9 kann entsprechend des Galvo-Scanners 6 der Figuren 2 und 3 mit Hilfe eines Sensors 7 passieren, der die Unebenheiten auf der Oberfläche 2a abbildet und einem Mikrocontroller oder Computer - hier nicht gezeigt - zuführt, so dass das Mittel zum Bewegen 9 der Steuereinheit 8 entsprechend gesteuert werden kann. Hierbei tastet der Sensor 7 auch die nach oben freie Fläche 2a, 2b der pastösen Masse 2 in der Form 1 ab und betrachtet dabei die gesamte Oberfläche 2a, 2b der pastösen Masse 2, die sich innerhalb des Kegels 4b befindet.

Es wird vom Fachmann verstanden werden, dass die gezeigten Ausführungsbeispiele nur beispielhaft sind und alle gezeigten Elemente, Module, Bauteile, Teilnehmer und Einheiten verschieden ausgestaltet sein können aber dennoch die hier beschriebenen Grundfunktionalitäten erfüllen können.

## Patentansprüche

1. Ein Verfahren zum Bilden einer egalisierten Oberfläche (2b) von zumindest einer pastösen Masse (2) in einer Form (1), wobei die Form (1) insbesondere angepasst ist zum Formen von Lippenstiftminen, das Verfahren aufweisend:
Befüllen (3) der Form (1) mit der pastösen Masse (2);
zumindest teilweises Abkühlen der pastösen Masse (2) in der Form (1); zumindest teilweises Aufschmelzen der Oberfläche (2a) der abgekühlten pastösen Masse (2) in der Form (1) zum Egalisieren der Oberfläche (2a) durch Wärmeeintrag, wobei der Wärmeeintrag durch fokussierte optische Photoemission (4a) stattfindet.

2. Das Verfahren nach Anspruch 1, weiter aufweisend:
Steuern des Wärmeeintrages.

3. Das Verfahren nach Anspruch 2, wobei das Steuern aufweist:
Ändern der Richtung der fokussierten optischen Photoemission (4a).

4. Das Verfahren nach Anspruch 3, wobei das Ändern der Richtung der fokussierten optischen Photoemission (4a) keinem Muster oder einem bestimmten Muster folgt.

5. Das Verfahren nach Anspruch 2, wobei das Steuern aufweist:
Regeln der Energie der fokussierten optischen Photoemission (4a).

6. Das Verfahren nach einem der vorhergehenden Ansprüche, weiter aufweisend:
Bestimmen eines ersten Grades der Ebenheit der Oberfläche (2a) der pastösen Masse (2) vor dem Aufschmelzen; und
Beginnen des Aufschmelzens der Oberfläche (2a), wenn der erste Grad der Ebenheit einen ersten Grenzwert erreicht.

7. Das Verfahren nach einem der vorhergehenden Ansprüche, weiter aufweisend:
Bestimmen eines zweiten Gerades der Ebenheit der Oberfläche (2b) der pastösen Masse (2) beim Aufschmelzen; und
Beenden des Aufschmelzens der Oberfläche (2b), wenn der zweite Grad der Ebenheit einen zweiten Grenzwert erreicht.

## Claims

1. A method for forming a leveled surface (2b) of at least one pasty mass (2) in a mold (1), wherein the mold (1) is particularly adapted to mold lipstick mines, the method comprising:
filling (3) the mold (1) with the pasty mass (2);
at least partially cooling the pasty mass (2) in the mold (1);
at least partially melting the surface (2a) of the cooled pasty mass (2) in the mold (1) to level the surface (2a) by heat introduction, wherein
the heat introduction takes place via focused optical photo emission (4a).

2. The method according to claim 1, further comprising:
controlling the heat introduction.

3. The method according to claim 2, wherein the controlling comprises:
changing the direction of the focused optical photo emission (4a).

4. The method according to claim 3, wherein the changing of the direction of the focused optical photo emission (4a) does not follow a pattern or follows a specific pattern.

5. The method according to claim 2, wherein the controlling comprises:
regulating the energy of the focused optical photo emission (4a).

6. The method according to any of the preceding claims, further comprising:
determining a first degree of evenness of the surface (2a) of the pasty mass (2) before the melting; and
starting the melting of the surface (2a), when the first degree of evenness reaches a first threshold.

7. The method according to any of the preceding claims, further comprising:
determining a second degree of evenness of the surface (2b) of the pasty mass (2) during the melting; and
finishing the melting of the surface (2b), when the second degree of evenness reaches a second threshold.

## Revendications

1. Procédé servant à former une surface (2b) lissée d'au moins une masse pâteuse (2) dans un moule (1), dans lequel le moule (1) est adapté en particulier pour mouler des raisins de rouges à lèvres, le procédé comprenant :
le remplissage (3) du moule (1) par la masse pâteuse (2) ;
le refroidissement au moins partiel de la masse pâteuse (2) dans le moule (1) ;
la fusion au moins partielle de la surface (2a) de la masse pâteuse (2) refroidie dans le moule (1) pour lisser la surface (2a) par apport de chaleur, l'apport de chaleur résultant d'une photoémission optique focalisée (4a).

2. Procédé selon la revendication 1, comprenant en outre :
la commande de l'apport de chaleur.

3. Procédé selon la revendication 2, dans lequel la commande comprend :
la modification de la direction de la photoémission optique focalisée (4a).

4. Procédé selon la revendication 3, dans lequel la modification de la direction de la photoémission optique focalisée (4a) ne suit aucun modèle ou aucun modèle prédéfini.

5. Procédé selon la revendication 2, dans lequel la commande comprend :
l'ajustement de l'énergie de la photoémission optique focalisée (4a).

6. Procédé selon l'une des revendications précédentes, comprenant en outre :
la définition d'un premier degré de planéité de la surface (2a) de la masse pâteuse (2) avant la fusion ; et
le commencement de la fusion de la surface (2a) quand le premier degré de planéité atteint une première valeur limite.

7. Procédé selon l'une des revendications précédentes, comprenant en outre :
la définition d'un deuxième degré de planéité de la surface (2b) de la masse pâteuse (2) lors de la fusion ; et
la fin de la fusion de la surface (2b) quand le deuxième degré de planéité atteint une deuxième valeur limite.
